# EUROPEAN PATENT APPLICATION

(11) **EP 2 790 386 A1**
(43) Date of publication of application: **15.10.2014**
(21) Application number: 13163036.0
(22) Date of filing: 10.04.2013
(51) Int. Cl.: H04L 29/12, H04L 12/721, H04L 12/911

(54) **Method of managing wired connections and connection manager**

(71) Applicant: ALCATEL LUCENT, 92100 Boulogne-Billancourt (FR)
(72) Inventor: Mongazon-Cazavet, Bruno, 91620 Nozay (FR); El, Mghazli, Yacine, 91620 Nozay (FR)
(74) Representative: Camus, Olivier Jean-Claude

(57) **Abstract**

The invention relates to a method of managing wired connections of users to an IP network, the method comprising the following steps:
- (101) Receiving from a user a request for a requested IP address to access the wired IP network with a requested quality of service during a requested duration;
- Allocating an allocated IP address to the user;
- (105) Sending to the user a proposal message containing the allocated IP address associated with an allocated QoS for an allocated duration;
- (107) Controlling traffic between the user and the IP network to maintain the allocated QoS for the allocated duration.

## Description

### TECHNICAL FIELD

The present invention relates to a method of managing wired connections of users to an IP network. The present invention also relates to a connection manager to perform the method.

### BACKGROUND

End users of the wired Internet access the network as a global transport service in a concurrent manner. Depending on the current state and load of the network, the transport service may vary in bandwidth, latency, error rate... Generally speaking, the transport service is perceived by users with quality of service variation. The variation is not globally predictable and often visible to users in a negative way depending on their activities (streaming, email...). Although this situation is accepted because of the "flat-rate" nature of ISP (Internet services provider) subscription, it would be advantageous to be able to predict in advance the usage of the wired Internet by the users.

A well-known solution in this area was RSVP protocol (Resource Reservation Protocol), which proposes to reserve resources with in-band signaling. It was implemented in some routers but it breaks the stateless principle of the Internet routers.

Another technology of the prior art to solve this problem is the Diffserv (Differentiated services) technology. However, that technology does not provide a way to guarantee the end-to-end quality of service. The concept of Bandwidth broker (defined in RF2638) tries to solve this problem: a Bandwidth Broker is an agent that has some knowledge of an organization's priorities and policies and allocates resources with respect to those policies. Admission control is one of the main tasks that a Bandwidth Broker has to perform, in order to decide whether an incoming resource reservation request will be accepted or not. Most Bandwidth Brokers use simple admission control modules, although there are also proposals for more sophisticated admission control according to several metrics such as acceptance rate, network utilization, etc. Finally bandwidth brokers are responsible for provisioning the ingress and egress routers of the domain with the quality of services policies. But this is mostly restricted to agreements between internet service providers. This does not allow an end user to reserve resources.

Finally, as far as wired networks are concerned, the current trend is to duplicate the content near (in the geographical/network topology sense) the users. Such solutions attempt to offload as much as possible user traffic from the global transport system. However this requires duplicating and synchronizing contents, which is not a cheap neither trivial operation. In addition, redirection of user requests to local content in the Internet is still an issue in standards. Nevertheless, we can today consider that the widespread use of CDNs is finally the answer of the industry to provide a satisfying quality of experience to the Internet users. But the data traffic grows in parallel and users still compete for the internet service provider bandwidth.

However, none of the above cited solution can efficiently guarantee the level of quality of services and/or quality of experience in a fixed access network between a user and an internet service provider network.

### SUMMARY OF THE INVENTION

The technical problem to solve is then to provide a method guaranteeing a high level of quality of service and of experience in a fixed access network between a user and a wired network.

To this purpose, the invention relates to a method of managing wired connections of users to an IP network, the method comprising the following steps:
- (a) Receiving from a user a request for a requested IP address to access the IP network with a requested quality of service during a requested duration;
- (b) Allocating an allocated IP address to the user for an allocated quality of service during an allocated duration;
- (c) Sending to the user a proposal message containing the allocated IP address associated with the allocated quality of service and the allocated duration;
- (d) Controlling traffic between the user and the IP network to maintain the allocated quality of service for the allocated duration.

According to this method, the users can request an IP address for a precise goal/service and a connection manager implementing the method according to the invention allocates them the quality of service together with the IP address that they need for their precise goal/service, or at least a negotiated quality of service. The connection manager is then responsible for guaranteeing them the allocated quality of service. Consequently, on the contrary of the prior art methods in which users are systematically allocated the maximum available quality of service, the method according to the invention proposes to allocate the users the right quality of service that they need for their usage. The method enables then to dynamically allocate network resources and to better control the resources of the IP network. The method enables in particular to better control the uplink and the downlink bandwidth, the priority, the packet delay budget, the packet error loss rate... of communication with the IP network.

The method according to the invention can also comprise one or several of the following features, taken individually or according to all possible technical combinations.

The quality of service (QoS) can be expressed in term of bandwidth, priority, packet delay budget, packet error loss rate... It can also be expressed in term of guaranteed bit rate, maximum bit rate...

The quality of service that can be requested by a user can be classified in classes, each class being characterized by a quality of service class identifier.

According to one embodiment, the method further comprises a step of releasing the allocating IP address once the allocation duration has expired.

The step of allocating/releasing the allocated IP address is preferably performed according to a DHCP protocol (Dynamic Host Configuration Protocol).

According to different embodiments:
- the allocated quality of service can be the requested quality of service and the allocated duration can be the allocated duration or
- the allocated quality of service can be a negotiated quality of service and/or the allocated duration can be a negotiated duration. As a matter of fact, if the quality of service requested by the user and/or the duration requested by the user is not available, a negotiated quality of service and/or a negotiated duration can be proposed to the user. In that case, the method can comprise, before the step of sending the proposal message, the following steps:
   o Sending to the user a negotiation message containing a negotiated quality of service for a negotiated duration;
   o Receiving an answer message of approval or of refusal from the user.
- When the answer message of the user is a message of approval, the allocated quality of service corresponds to the negotiated quality of service and/or the allocated duration corresponds to the negotiated duration.

Advantageously, the step of controlling traffic between the user and the IP network comprises:
- a step of controlling the downlink traffic coming from the IP network to the user and/or
- a step of controlling the uplink traffic coming from the user to the IP network.

According to one embodiment, the method is implemented by a connection manager comprising a first hop router configured to be linked by a wired connection to at least one user and a last hop router configured to be linked by a wired connection to the IP network.

Advantageously, the method can comprise the following steps:
- Reception by the first hop router of a request from a user for a requested IP address to access the IP network with a requested quality of service during a requested duration;
- Selection or creation by the first hop router toward the last hop router of a GTP tunnel enabling to fulfill the request of the user;
- Checking by the last hop router if it can fulfill the request of the user;
- Sending by the last hop router to the first hop router of a proposal message containing an allocated IP address together with an allocated quality of service and an allocated duration;
- Controlling traffic by the first hop router and the last hop router to maintain the allocated quality of service in the communications between the user and the IP network during the allocated duration.

Advantageously, the step of allocating an allocated IP address to the user is performed by the first hop router if the first hop router creates the GTP tunnel or by the last hop router if the first hop router selects the GTP tunnel.

According to different embodiments:
- the allocated IP address send in the proposal message is the IP address of the GTP tunnel;
- the allocated IP address send in the proposal message is a translation of the IP address of the GTP tunnel in a local address.

Another aspect of the invention concerns a wired connection manager comprising means to implement the method according to any of the previous embodiments.

The wired connection manager can be an internet service provider.

The wired connection manager can comprise:
- a first hop router configured to be connected by a wired connection to at least one user, and
- a last hop router configured to be connected by a wired connection to the IP network.

The first hop router is preferably configured to:
- Receive from a user a request for a requested IP address to access the IP network with a requested quality of service during a requested duration;
- Select or create toward the last hop router of a GTP tunnel enabling to fulfill the request of the user;
- Control traffic between the user and the IP network to maintain the allocated quality of service during the allocated duration.

The last hop router is preferably configured to:
- Check if it can fulfill the request of the user;
- Send to the first hop router of a proposal message containing an allocated IP address together with an allocated quality of service and an allocated duration;
- Control traffic between the user and the IP network to maintain the allocated QoS during the allocated duration.

### BRIEF DESCRIPTION OF THE DRAWINGS

Figure 1 represents a wired communication network implementing a method according to one embodiment of the invention.
Figure 2 represents the steps of a method according to one embodiment of the invention.

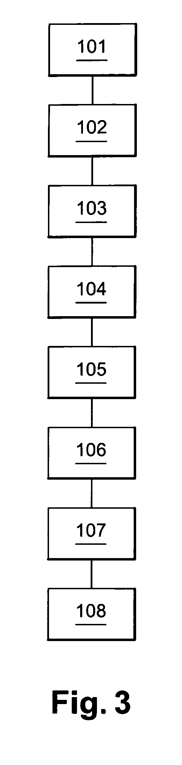

Figure 3 represents the steps of a method according to one embodiment of the invention.

### DETAILED DESCRIPTION

The present invention will now be described with reference to the accompanying drawings. The drawings are intended to provide one example of how the invention can be implemented and are not intended to limit the applicability of the present invention.

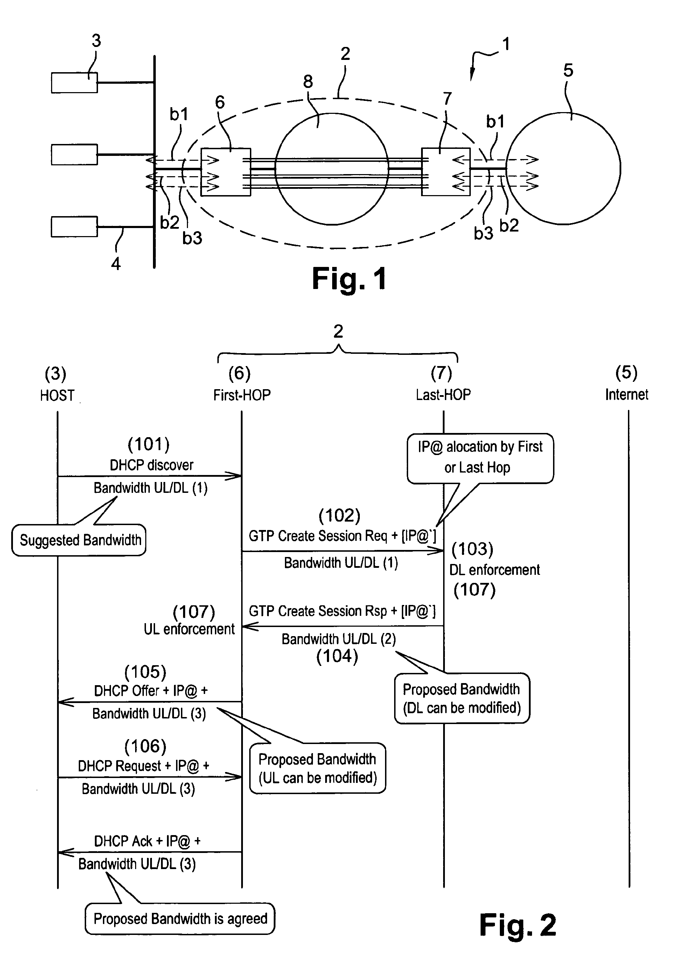

Figure 1 represents a communication network 1 according to one embodiment of the invention. That communication network comprises a connection manager 2 implementing a method according to the invention. The connection manager can be an internet service provider. The communication network 1 also comprises users 3 connected to the connection manager by means of a wired connection medium which is here an Ethernet medium 4. The communication network 1 also comprises an IP network 5 which is here an internet network. The users 2 can be connected to the IP network 5 by means of the connection manager 2.

The connection manager 2 comprises:
- a first hop router 6 linked to the users by the wired connection and
- a last hop router 7 linked to the IP network by a wired connection.

The first hop router 6 is linked to the last hop router 7 by an IP routing network 8.

The connection manager 2 implements a method according to one embodiment of the invention.

To that purpose, the quality of service that can be provided to a user by the IP network are classified in quality of service classes. Each class is defined by a quality of service class identifier QCI. Each class can be characterized by:
- an uplink bandwidth;
- a downlink bandwidth;
- a resource type that can be guaranteed bit rate or non guaranteed bit rate;
- a priority level;
- a packet delay budget;
- a packet error loss rate.

Each activity that can be performed via the IP network by the user corresponds to one class of quality of service (non-exhaustive):

| QCI | Resource Type | Priority | Packet Delay Budget | Packet Error Loss Rate | UL Bandwidth | DL Bandwidth | Usage |
|---|---|---|---|---|---|---|---|
| 1 | GBR | 1 | 100 ms | 10 ⁻⁶ | 200 Kbps | 200 Kbps | Emergency |
| 2 | GBR | 2 | 100 ms | 10 ⁻² | 64 Kbps | 64 Kbps | Voice |
| 3 | GBR | 3 | 150 ms | 10 ⁻³ | 400 Kbps | 400 Kbps | Visio |
| 4 | GBR | 4 | 300 ms | 10 ⁻³ | 3 Mbps | 10 Mbps | Web |

A user 3 can request dynamically an IP address to access the IP network providing additional usage information by the mean of expected quality of service and duration. The users can request each a quality of service for a particular usage of the Internet: for example, as represented on figure 1, the request b1 corresponds to a request to practice conversational voice, which corresponds the class of quality of service QCI2, the request b2 corresponds to a request to use email, which corresponds to the class of quality of service QCI4, the request b3 corresponds to a request of real time gaming which corresponds the class of quality of service QCI4. Users can also request the uplink/downlink bandwidth in accordance with the usage they will do of the IP network. Note that voice over IP might require less amount of bandwidth than email but at the same time smaller packet delay budget and smaller error rate.

During a first step 101, the connection manager 2 receives then, via the first hop router 6, at least one request of at least one user for an IP address to access the IP network with a requested quality of service during a requested duration. The requested quality of service can be expressed in the form of the mention of the activity that the user intends to perform. In that case, the connection manager 2 can convert the knowledge of the activity in terms of class of quality of service. According to another embodiment, the requested quality of service can be expressed in terms of specifications of bandwidth, priority, guaranteed bit rate, packet loss... Depending of the activity of the user, the specification for the uplink traffic can be different of the specifications for the downlink traffic. According to another embodiment, the requested QoS can be directly expressed in term of class of quality of service.

The method comprises then a step 102 of selection or creation by the first hop router of a GTP tunnel towards the last hop router to fulfill the request of the user. During that step, the first hop router can either allocate an IP address for the request of the user or he can ask to the last hop router to allocate an IP address for the request of the user.

The last hop router checks then, during a step 103, if he is able to satisfy the request of the user depending on the current connection manager network state including expected quality of service, concurrent usage, user history...

The method comprises then a step 104 of sending by the last hop router to the first hop router of an allocated IP address together with an allocated QoS and an allocated duration. If the last hop router is able to satisfy the request of the user, the allocated quality of service corresponds to the requested quality of service and the allocated duration corresponds to the requested duration. Alternatively, if the last hop router is not able to satisfy the request of the user, the allocated quality of service can correspond to a negotiated quality of service and/or the allocated duration can correspond to a negotiated duration.

The method comprise then a step 105 of sending by the first hop router to the user of a proposal message containing the allocated IP address, the allocated quality of service and the allocated duration. More precisely, according to one embodiment, the first hop router returns the IP address of the GTP tunnel as the DHCP allocated IP address. According to another embodiment, the first hop router can translate the GTP tunnel address into a local private address, providing the first hop router is able to handle address mapping properly. The detail of IP address allocation is conforming to the DHCP protocol.

The method can then comprise a step 106 of receiving an acceptation message of the user. Once the user and the connection manager agree on the quality of service and the allocated duration, the allocated IP address is available for the target usage and the given period.

The method comprises then a step 107 of controlling traffic in order to guarantee the allocated quality of service during the allocated duration to the user. As a matter of fact, the connection manager is responsible for satisfying the allocated quality of service during the allocated period of time. To that purpose, the connection manager uses GTP tunnels and DSCP marking between the first hop router and the last hop router. Besides the first hop router deploys uplink traffic control mechanisms toward the IP network and the last hop router deploys downlink traffic control mechanisms toward the user in order to maintain the allocated quality of service during the allocation duration.

Once the allocated duration has exhausted, the method comprises a step 108 of releasing the IP address. The detail of IP address releasing is conforming to the DHCP protocol.

The method further comprises a step 109 of updating of the connection manager network state for subsequent user requests.

While the present invention has been particularly described with reference to the preferred embodiments, it should be readily apparent to those of ordinary skill in the art that changes and modifications in form and details may be made without departing from the scope of the invention.

## Claims

1. Method of managing wired connections of users (3) to an IP network (5), the method comprising the following steps:
- (101) Receiving from a user (3) a request for a requested IP address to access the IP network (5) with a requested quality of service during a requested duration;
- Allocating an allocated IP address to the user (3) for an allocated quality of service during an allocated duration;
- (105) Sending to the user (3) a proposal message containing the allocated IP address, the allocated quality of service and the allocated duration;
- (107) Controlling traffic between the user (3) and the IP network (5) to maintain the allocated quality of service for the allocated duration.

2. Method according to claim 1, further comprising a step (108) of releasing the allocating IP address according to the DHCP protocol once the allocation duration has expired.

3. Method according to any of the previous claims, wherein the allocated quality of service corresponds to the requested quality of service and the allocated duration corresponds to the allocated duration.

4. Method according to claim 1 or 2, further comprising the following steps:
- Sending to the user a negotiation message containing a negotiated quality of service and a negotiated duration;
- Receiving an answer message of approval or of refusal from the user.

5. Method according to the previous claim, wherein, when the answer message is a message of approval, the allocated quality of service corresponds to the negotiated quality of service and/or the allocated duration corresponds to the negotiated duration.

6. Method according to any of the previous claims, wherein the step of allocating an allocated IP address uses a DHCP protocol.

7. Method according to any of the previous claims, wherein the step (108) of controlling traffic between the user and the IP network comprises a step of controlling the uplink traffic coming from the user to the IP network.

8. Method according to any of the previous claims, wherein the step (108) of controlling traffic between the user and the IP network comprises a step of controlling the downlink traffic coming from the IP network to the user.

9. Method according to any of the previous claims implemented by a connection manager (2) comprising a first hop router (6) configured to be linked by a wired connection to at least one user (3) and a last hop router (7) configured to be linked by a wired connection to the IP network (5), the method comprising the following steps:
- (101) Reception by the first hop router (6) from a user (3) of a request for a requested IP address to access the IP network (5) with a requested quality of service during a requested duration;
- (102) Selection or creation by the first hop router (6) toward the last hop router (7) of a GTP tunnel enabling to fulfill the request of the user (3);
- (103) Checking by the last hop router (7) if it can fulfill the request of the user (3);
- (104) Sending by the last hop router (7) to the first hop router (6) of a proposal message containing an allocated IP address together with an allocated quality of service and an allocated duration;
- (107) Controlling traffic by the first hop router and the last hop router to maintain the allocated quality of service in the communications between the user and the IP network during the allocated duration.

10. Method according to the previous claim, wherein the step of allocating an allocated IP address to the user is performed by the first hop router if the first hop router creates the GTP tunnel or by the last hop router if the first hop router selects the GTP tunnel.

11. Method according to any of claims 9 or 10, wherein the allocated IP address sent in the proposal message is the IP address of the GTP tunnel.

12. Method according to any of claims 9 to 11, wherein the step of controlling traffic between the user and the IP network comprises a step of controlling traffic between the first hop router and the last hop router by means of DSCP marking.

13. Wired connection manager (2) comprising means to implement the method according to any of the previous claims.

14. Wired connection manager (2) according to the previous claim, comprising a first hop router (6) configured to be connected to at least one user (3), and a last hop router (7) configured to be connected to the IP network (5),
- The first hop router (6) being configured to:
- Receive from a user a request for a requested IP address to access the IP network with a requested quality of service during a requested duration;
- Select or create toward the last hop router of a GTP tunnel enabling to fulfill the request of the user;
- Control traffic between the user and the IP network to maintain the allocated QoS during the allocated duration to the user;
- The last hop router (7) being configured to:
- Check if it can fulfill the request of the user;
- Send to the first hop router of a proposal message containing an allocated IP address together with an allocated QoS and an allocated duration;
- Control traffic between the user and the IP network to maintain the allocated QoS during the allocated duration to the user.
